(19) Europäisches Patentamt
European Patent Office
Office européen des brevets

(11) **EP 4 487 719 A2**

(12) **EUROPEAN PATENT APPLICATION**

(43) Date of publication:
**08.01.2025 Bulletin 2025/02**

(21) Application number: **24206771.8**

(22) Date of filing: **14.02.2020**

(51) International Patent Classification (IPC):
**A24F 40/51** (2020.01)

(52) Cooperative Patent Classification (CPC):
**A24D 1/20; A24F 40/51;** A24F 40/20; A24F 40/50

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 EP 19157561**

(62) Document number(s) of the earlier application(s) in accordance with Art. 76 EPC:
**20704315.9 / 3 923 754**

(71) Applicant: **Philip Morris Products S.A.**
**2000 Neuchâtel (CH)**

(72) Inventor: **FRAKE, James**
**Cambridge, CB22 7GG (GB)**

(74) Representative: **Reddie & Grose LLP**
**The White Chapel Building**
**10 Whitechapel High Street**
**London E1 8QS (GB)**

Remarks:
This application was filed on 15-10-2024 as a divisional application to the application mentioned under INID code 62.

(54) **AEROSOL-GENERATING DEVICE HAVING CAPACITANCE BASED POWER CONTROL**

(57)    A controller (124, 224, 324, 424) for an aerosol-generating device of an aerosol-generating system, wherein the controller is configured to: control a supply of power from a power supply (126, 226) to at least one heater (120, 220) for heating an aerosol-generating article (140, 340, 440), the aerosol-generating article (140, 340, 440) comprising an aerosol-forming substrate (142, 342, 442), the aerosol-forming substrate (142, 342, 442) being a substantially solid dielectric material; measure the capacitance across a first electrode (128, 228) and a second electrode (130, 268), the second electrode (130, 268) being spaced apart from the first electrode (128, 228) so that at least a portion of an aerosol-generating article (140) is receivable between the first electrode (128, 228) and the second electrode (130, 268); and vary the supply of power to the at least one heater based on the measured capacitance.

Figure 3

**Description**

The present invention relates to aerosol-generating systems comprising an aerosol-forming substrate arrangeable between electrodes such that the aerosol-forming substrate and electrodes form a capacitor. The present invention also relates to aerosol-generating devices comprising electrodes spaced apart so that an aerosol-forming substrate can be arranged between the electrodes to form a capacitor.

One type of aerosol-generating system is an electrically operated smoking system. Known handheld electrically operated smoking systems typically comprise an aerosol-generating device comprising a battery, control electronics and an electric heater for heating an aerosol-generating article designed specifically for use with the aerosol-generating device. In some examples, the aerosol-generating article comprises an aerosol-forming substrate, such as a tobacco rod or a tobacco plug, and the heater contained within the aerosol-generating device is inserted into or around the aerosol-forming substrate when the aerosol-generating article is inserted into the aerosol-generating device.

Typically, the aerosol-generating device is configured to generate heat using the electric heater according to a predetermined heating profile. However, variations in the aerosol-forming substrate may result in undesirable variations in a user experience. For example, in high humidity environments, the aerosol-forming substrate may exhibit a high water content. Since water is aerosolised at typical operating temperatures for aerosol-generating devices, a high water content may result in an undesirably high perceived aerosol temperature by a user. In another example, an aerosol-forming substrate that has already been heated may exhibit a low water content. A low water content may result in a reduced transfer of heat from the aerosol-forming substrate if a user attempts to re-heat the aerosol-forming substrate in an aerosol-generating device. The reduced transfer of heat from the aerosol-forming substrate may result in over-heating of the aerosol-generating device.

It would be desirable to provide an aerosol-generating device that mitigates or overcomes at least some of the disadvantages with known aerosol-generating devices. In particular, it would be desirable to provide an aerosol-generating device that enables monitoring of the amount of water present in an aerosol-forming substrate prior to heating of the aerosol-forming substrate.

According to a first aspect of the present invention, there is provided an aerosol-generating system comprising: an aerosol-generating article comprising an aerosol-forming substrate, the aerosol-forming substrate being a dielectric material; an aerosol-generating device; and a first electrode and a second electrode. Preferably, the aerosol-forming substrate is a substantially solid aerosol-forming substrate. The aerosol-generating device comprises: a power supply; at least one heater; and a cavity for receiving the aerosol-generating article. The aerosol-generating device further comprises a controller configured to control a supply of power from the power supply to the at least one heater for heating the aerosol-forming substrate when the aerosol-generating article is received within the cavity. The second electrode is spaced apart from the first electrode so that at least a portion of the aerosol-forming substrate is received between the first electrode and the second electrode when the aerosol-generating article is received within the cavity. The first electrode, the portion of the aerosol-forming substrate and the second electrode form a capacitor when the aerosol-generating article is received within the cavity. The controller of the aerosol-generating device is further configured to: measure the capacitance of the capacitor via the first and second electrodes when the aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

Advantageously, the controller is configured to measure the capacitance of the capacitor formed by the first electrode, the second electrode and the portion of the aerosol-forming substrate arranged between the first electrode and the second electrode when the aerosol-generating article is received within the cavity and to vary the supply of power to the at least one heater based on the measured capacitance.

Advantageously, the measured capacitance may be indicative of the amount of water present in the aerosol-forming substrate between the first electrode and the second electrode. A relatively high measured capacitance may be indicative of a relatively high water content. A relatively low measured capacitance may be indicative of a relatively low water content. The controller varies a supply of power to the at least one heater based on the measured capacitance. Advantageously, varying the supply of power to the at least one heater based on the measured capacitance may enable the system to generate an aerosol having consistent properties.

Capacitive sensing of an aerosol-forming substrate is known in aerosol-generating systems. For example, see international patent application publication numbers: WO 2017/051006 A1, WO 2017/051011 A1; and WO 2017/051016 A1, in the name of Philip Morris Products S.A.. In these publications, measurements of the capacitance of a capacitor comprising aerosol-forming substrate between two electrodes are used to provide an indication of the amount of one or more volatile compounds in the aerosol-forming substrate. This information is then used to determine when one or more volatile compounds of the aerosol-forming substrate is depleted and to terminate heating of the substrate when the one or more volatile compounds have been depleted.

The inventors of the present invention have realised that capacitive sensing of an aerosol-forming substrate can also be used to control the power supplied to the heater to improve the consistency of the properties of an aerosol generated from an aerosol-forming substrate, and, in turn, to improve the experience of a user.

The water content of an aerosol-forming substrate can affect the water-vapour content of an aerosol generated from the substrate. In particular, an increase in the water content of an aerosol-forming substrate can result in an increase in the water-vapour content of an aerosol generated from the substrate. The water-vapour content of an aerosol can affect the apparent temperature of an aerosol, which is the temperature of an aerosol perceived by a user. Typically, an increase in the water-vapour content of an aerosol results in an increase in the apparent temperature of the aerosol. Accordingly, it is generally desirable to maintain the water content of an aerosol-forming substrate at a consistent level. However, the water content of an aerosol-forming substrate can be affected by multiple factors, such as how the aerosol-forming substrate is stored and the ambient humidity in the environment in which the aerosol-generating system is used. As a result, it can be difficult to maintain the water content of an aerosol-forming substrate at a consistent level.

The inventors of the present invention have realised that measurements of capacitance of a capacitor formed by an aerosol-forming substrate arranged between a pair of electrodes are particularly sensitive to the presence of water in the aerosol-forming substrate, and to changes in the volume fraction of water in the aerosol-forming substrate. The capacitance of a capacitor is a function of the relative permittivity of the material arranged between the electrodes of the capacitor. The relative permittivity, or dielectric constant, of a material describes the tendency of the material to polarize in response to an applied electrical field. Water tends to have a relatively high relative permittivity compared to other materials present in an aerosol-forming substrate, such as tobacco and aerosol-formers, such as propylene glycol. Accordingly, capacitance sensing of an aerosol-forming substrate may be particularly effective at providing an indication of the water content of the aerosol-forming substrate and for sensing changes in the water content of the aerosol-forming substrate.

The inventors of the present invention have also realised that the indication of the water content of an aerosol-forming substrate provided by capacitance measurements of the substrate may be used to control the temperature of an aerosol generated from the substrate, by controlling the temperature of the heater heating the substrate to generate the aerosol. Controlling the temperature of the heater heating the substrate to generate the aerosol may be achieved by controlling the supply of power to the heater based on the capacitance measurements. Accordingly, controlling the supply of power to a heater heating an aerosol-forming substrate based on capacitance measurements of the aerosol-forming substrate may enable an aerosol-generating system to generate an aerosol with consistent properties.

The aerosol-generating device comprises a controller configured to control a supply of power from the power supply to the at least one heater. In particular, the controller is configured to control a supply of power from the power supply to the at least one heater for heating the aerosol-forming substrate when the aerosol-generating article is received within the cavity.

As used herein, the term "power" may be used to refer to the instantaneous power supplied to the heater, but typically is used to refer to the real power, or the average power, supplied to the heater over a period of time. In particular, where power is supplied to the heater via an alternating voltage or current, the term "power" refers to the real power supplied to the heater.

The controller may be configured to control the supply of power from the power supply to the at least one heater in any suitable manner. For example, the controller may be configured to supply power from the power supply to the at least one heater continuously following activation of the system or intermittently, such as on a puff-by-puff basis.

In some preferred embodiments, the controller may be configured to supply power from the power supply to the electric heater in the form of pulses of electrical current. In these preferred embodiments, the controller may be configured to control the supply of power to the heater by controlling the duty cycle of the supply of power to the heater. As used herein the term "duty cycle" refers to the relative wattage output of a power supply compared to the maximum wattage output of the power supply. Thus, a 70% duty cycle indicates that the power supply is delivering a wattage output that is 70% of the maximum wattage output that the power supply can deliver. The controller may be configured control the duty cycle by any suitable means. For example, the controller may be configured to control the duty cycle by pulse width modulation.

The controller is configured to supply power from the power supply to the at least one heater in accordance with predetermined power profiles. The predetermined power profiles may be stored on a memory of the controller. The controller may be configured to supply a constant power to the heater in accordance with a predetermined power profile. The controller may be configured to supply power to the heater that varies over time in accordance with a predetermined power profile. For example, the controller may be configured to supply a first power to the heater for a first predetermined period of time and then supply a second power to the heater for a second predetermined period of time in accordance with a predetermined power profile.

The controller of the aerosol-generating device is further configured to: measure the capacitance of the capacitor via the first electrode and the second electrode when the aerosol-generating article is received within the cavity. The controller is configured to control the supply of power to the at least one heater based on a measured capacitance. The controller may be configured to control the supply of power to the at least one heater based on a measured capacitance in any suitable manner.

In particular, the controller may be configured to supply a normal power profile to the at least one heater when the capacitance measurements indicate that the water content within the aerosol-forming substrate is within a normal operating level and to supply a modified power profile to the at least one heater when the capacitance measurements indicate that the water content within the aerosol-forming substrate is above the normal operating level or below the normal operating level.

The controller may be configured to supply a low power profile to the at least one heater when the capacitance measurements indicate that the water content of the aerosol-forming substrate is above a normal operating level. The low power profile may supply a lower power to the heater compared to the normal power profile. Reducing the power supplied to the heater to heat a wet aerosol-forming substrate may reduce the temperature of the aerosol generated from the wet aerosol-forming substrate below the temperature of an aerosol generated from a non-wet aerosol-forming substrate heated by a heater supplied with the normal power profile. This may reduce the perceived temperature of the aerosol generated from the wet aerosol-forming substrate to the normal perceived temperature of an aerosol generated from a non-wet aerosol-forming substrate.

Supplying a low power profile to the heater for an initial period of time may enable the heater to drive off the excess water content from the aerosol-forming substrate over the initial period of time, resulting in the water content of the aerosol-forming substrate being within the normal operating level after the initial period of time. Accordingly, the controller may be configured to supply a low power profile to the at least one heater for a predetermined initial period of time when the capacitance measurements indicate that the water content of the aerosol-forming substrate is above a normal operating level, and further configured to supply the normal power profile to the heater after the predetermined initial period of time.

Similarly, in some embodiments the controller may be configured to supply a high power profile to the at least one heater when the capacitance measurements indicated that the water content of the aerosol-forming substrate is below the normal operating level. The high power profile may supply a higher power to the heater compared to the normal power profile. Increasing the power supplied to the heater to heat a dry aerosol-forming substrate may increase the temperature of the aerosol generated from the dry aerosol-forming substrate above the temperature of an aerosol generated from a non-dry aerosol-forming substrate heated by a heater supplied with the normal power profile. This may increase the perceived temperature of the aerosol generated from the dry aerosol-forming substrate to the normal perceived temperature of an aerosol generated from a non-dry aerosol-forming substrate.

The controller may be configured to supply power from the power supply to the heater in discrete power profiles, each power profile being associated with a particular range of measured capacitances. The controller may be configured to supply power from the power supply to the heater in any suitable number of power profiles. The controller may be configured to vary the power profile supplied to the heater as a function of the measured capacitance. The controller may be configured to vary the supply power from the power supply to the heater continuously as a function of the measured capacitance.

The controller is configured to: supply power from the power supply to the at least one heater in a first power profile when the measured capacitance is within a predetermined first range; and supply power from the power supply to the at least one heater in a second power profile, different to the first power profile, when the measured capacitance is within a predetermined second range.

The predetermined ranges may be any suitable types of ranges.

In some embodiments, a predetermined range may be any value that exceeds a predetermined threshold. In some embodiments, a predetermined range may be any value that is equal to or less than a predetermined threshold. In other words, a predetermined range may be an open range.

In some embodiments, a predetermined range may be between an upper predetermined threshold and a lower predetermined threshold. In other words, a predetermined range may be a closed range.

In some preferred embodiments, the predetermined first range and the predetermined second range are consecutive ranges, such that an upper limit of one of the ranges is equal to the lower limit of the other one of the ranges.

In some embodiments, the predetermined first range is an open range and the predetermined second range is an open range. In these embodiments, the controller may be configured to: supply power from the power supply to the at least one heater in a first power profile when the measured capacitance exceeds a predetermined first threshold; and supply power from the power supply to the at least one heater in a second power profile, different to the first power profile, when the measured capacitance is equal to or less than a predetermined second threshold. In some preferred embodiments, the predetermined first threshold is equal to the predetermined second threshold. In these preferred embodiments, the controller is configured to: supply power from the power supply to the at least one heater in a first power profile when the measured capacitance exceeds a predetermined threshold; and supply power from the power supply to the at least one heater in a second power profile, different to the first power profile, when the measured capacitance is equal to or less than the predetermined threshold.

In some embodiments, one of the predetermined first range and the predetermined second range is an open range and the other of the predetermined first range and the predetermined second range is a closed range.

In some embodiments, the predetermined first range is a closed range and the predetermined second range is a closed range. In these embodiments, the controller may be configured to: supply power from the power supply to the at least one heater in a first power profile when the measured capacitance is between a predetermined first lower threshold and a predetermined first upper threshold; and supply power from the power supply to the at least one heater in a second power profile, different to the first power profile, when the measured capacitance is between a predetermined second lower threshold and a predetermined second upper threshold. In some preferred embodiments, the predetermined first lower threshold is equal to the predetermined second upper threshold. In these preferred embodiments, the controller is configured to: supply power from the power supply to the at least one heater in a first power profile when the measured capacitance is between a predetermined middle threshold and a predetermined upper threshold; and supply power from the power supply to the at least one heater in a second power profile, different to the first power profile, when the measured capacitance is between a predetermined lower threshold and the predetermined middle threshold.

In some preferred embodiments, the controller is further configured to prevent the supply of power from the power supply to the at least one heater based on a measurement of capacitance. The controller may be configured to prevent the supply of power from the power supply to the at least one heater based on a comparison of a capacitance measurement with one or more of a predetermined upper threshold and a predetermined lower threshold.

A predetermined upper threshold may be indicative of a maximum acceptable water content of an aerosol-forming substrate, above which an aerosol generated from the aerosol-forming substrate is not acceptable for a user. The controller may be configured to prevent the supply of power from the power supply to the at least one heater when the capacitance measurements exceed the predetermined upper threshold.

A predetermined lower threshold may be indicative of a minimum acceptable water content of an aerosol-forming substrate, below which an aerosol generated from the aerosol-forming substrate is not acceptable for a user. The controller may be configured to prevent the supply of power from the power supply to the at least one heater when a capacitance measurement is below a predetermined lower threshold.

In some embodiments, the controller may be configured to prevent the supply of power from the power supply to the at least one heater when a measurement of capacitance is outside of a predetermined acceptable range, the acceptable range being defined between a predetermined upper threshold and a predetermined lower threshold.

In some preferred embodiments, the controller is further configured to measure the capacitance before supplying power from the power supply to the at least one heater for heating the aerosol-forming substrate. The one or more capacitance measurements taken before power is supplied to the at least one heater for heating the aerosol-forming substrate may be used to control the initial power supplied to the heater for heating the aerosol-forming substrate. Advantageously, measuring the capacitance before power is supplied to the heater to heat the aerosol-forming substrate enables the power supplied to the heater to be controlled from the start of a heating cycle.

In some preferred embodiments, the controller is further configured to periodically measure the capacitance and adjust the power supplied to the heater for heating the aerosol-forming substrate at periodic intervals based on the measured capacitance. In other words, the controller may be configured to repeatedly measure the capacitance throughout a heating cycle, and adjust the power supplied to the heater throughout a heating cycle based on the most recent measurement of capacitance. Advantageously, periodically measuring the capacitance throughout a heating cycle may enable the aerosol-generating system to generate an aerosol with consistent properties throughout the heating cycle. The length of time between consecutive periodic measurements of capacitance may be any suitable length of time. For example, the interval between consecutive periodic measurements of capacitance may be between about 0.5 seconds and about 30 seconds, or may be at least about 0.5 seconds, at least about 1 second, at least about 1.5 seconds or at least about 2 seconds.

In some embodiments, the aerosol-generating device comprises means for detecting a puff, and in these embodiments the controller may be configured to measure the capacitance when a puff is detected.

In some preferred embodiments, the controller is further configured determine when an aerosol-generating article is received in the cavity based on a measured capacitance. The controller may be further configured to subsequently supply power from the power supply to the at least one heater in one of the first and second power profiles when it is determined that an aerosol-generating article is received in the cavity. Accordingly, advantageously the capacitance measurements may be used to determine the presence of an aerosol-generating article in the cavity of the device. Using capacitance measurements to determine the presence of an aerosol-generating article in the cavity may enable the aerosol-generating device to provide this functionality without requiring additional components or sensors to be provided in the aerosol-generating device.

The aerosol-generating device may comprise a temperature sensor arranged to sense the ambient temperature, wherein the controller is arranged to determine the ambient temperature based on a signal received from the temperature sensor. The temperature sensor may comprise a thermistor. The temperature sensor may comprise a thermocouple. The temperature sensor may comprise a semiconductor temperature sensor.

The inventors of the present invention have recognised that, when the ambient temperature is low, it is not necessary to supply power to the at least one heater in accordance with the power profile for a substrate having a high water content when a capacitance measurement of the substrate indicates that the water content of the substrate is high. In particular, advantageously, the cool ambient air entering the aerosol-generating device during use may be sufficient to maintain the temperature of the generated aerosol at a level acceptable to a user, even when the aerosol-forming substrate has a high water content. In other words, in these embodiments the controller determines the power to be supplied to the heater by measurements of capacitance and measurements of ambient temperature.

In some embodiments, the controller may be configured to supply power from the power supply to the at least one heater in the second power profile when the measured capacitance is within the predetermined first range when a measured ambient temperature is below a predetermined ambient temperature threshold. Preferably, the ambient temperature threshold is between about 15 degrees Celsius and about 25 degrees Celsius, preferably between about 17 degrees Celsius and about 23 degrees Celsius. The ambient temperature threshold may be 18 degrees Celsius.

The controller may be configured to measure the capacitance of the capacitor formed by the first electrode, the second electrode and the portion of the aerosol-generating article arranged between the first electrode and the second electrode in any suitable manner. In particular, the controller may be configured to measure the capacitance of the capacitor by supplying power from the power supply to the first electrode and the second electrode in the form of an alternating current. The alternating current may have any suitable frequency, and preferably has a frequency in the range of between about 100 kHz and 1 GHz. Within the frequency range of between about 100 kHz and 1 GHz, it may be possible to consider the relative permeability to be a constant, ignoring lossy components that arise at particularly high and low frequencies.

The aerosol-generating system comprises a first electrode and a second electrode spaced apart from the first electrode so that at least a portion of the aerosol-forming substrate is received between the first electrode and the second electrode when the aerosol-generating article is received within the cavity. Advantageously, when the aerosol-generating article is received in the cavity of the aerosol-generating device, the first electrode, the second electrode and the portion of the aerosol-forming substrate disposed between the first electrode and the second electrode form a capacitor.

The first electrode and the second electrode may be provided in the system in a variety of manners. In some preferred first embodiments, the aerosol-generating device comprises both the first electrode and the second electrode. In some preferred second embodiments, the aerosol-generating article comprises the first electrode and the aerosol-generating device comprises the second electrode. In some preferred third embodiments, the aerosol-generating article comprises both the first electrode and the second electrode.

Electrodes comprised in the aerosol-generating device are typically electrically connected to the controller of the aerosol-generating device via a wired connection. Electrodes comprised in the aerosol-generating article may be electrically connected to the controller of the aerosol-generating device when the aerosol-generating article is received in the cavity of the device via one or more electrical contacts comprised in the device, the electrical contacts being electrically connected to the controller via a wired connection.

In preferred first embodiments, the aerosol-generating device comprises the first electrode and the second electrode.

In the preferred first embodiments, the first electrode and the second electrode may be arranged in the aerosol-generating device in any suitable arrangement. Preferably, the second electrode is aligned with the first electrode along the length of the cavity.

In some preferred first embodiments, the first electrode and the second electrode form part of an inner surface of the cavity. In these embodiments, the first electrode and the second electrode are preferably arranged on opposite sides of the inner surface of the cavity. The second electrode is preferably arranged opposite the first electrode. Preferably, the first electrode and the second electrode are substantially identical.

In some preferred first embodiments, the first electrode and the second electrode form substantially parallel plates, such that the capacitor is a parallel plate capacitor.

In some preferred first embodiments, each one of the first electrode and the second electrode extends around substantially half of the circumference of the cavity. The first electrode and the second electrode do not extend around half or more than half of the circumference of the cavity, such that the first electrode and the second electrode do not overlap or contact in any way.

In some preferred first embodiments, at least one of the first electrode and the second electrode forms part of the at least one heater. In these preferred first embodiments, the other one of the first electrode and the second electrode may form part of an inner surface of the cavity.

Forming the first electrode as part of the at least one heater may reduce the number of components required to manufacture the aerosol-generating device. In some embodiments, the at least one heater comprises a resistive heater including a resistive heating element. In some of these embodiments, the first electrode may be separately provided on a common electrically insulating substrate. In some of these embodiments, a resistive heating element may also form the first electrode, which may further simplify the construction of the aerosol-generating device.

In some particularly preferred first embodiments, the at least one heater comprises an elongate heater arranged for insertion into the aerosol-generating article when the aerosol-generating article is received within the cavity, and the first electrode forms part of the elongate heater. In these preferred first embodiments, the second electrode preferably forms part of an inner surface of the cavity. The second electrode may extend substantially around the circumference of the inner surface of the cavity. This may enable the second electrode to circumscribe at least a portion of the aerosol-generating article when the aerosol-generating article is received in the cavity. The second electrode may substantially circumscribe the first electrode. The second electrode may be concentric with the first electrode. The second electrode may be an annular electrode.

In preferred second embodiments, the aerosol-generating article comprises the first electrode and the aerosol-generating device comprises the second electrode. In these preferred second embodiments, the aerosol-generating device further comprises a first electrical contact for contacting the first electrode when the aerosol-generating article is received within the cavity.

In the preferred second embodiments, the first electrode may be arranged in the aerosol-generating article in any suitable position and the second electrode may be arranged in the aerosol-generating device in any suitable position. Preferably, the second electrode is aligned with the first electrode along the length of the cavity when the aerosol-generating article is received in the cavity.

Preferably, at least a portion of the first electrode forms part of the radial outer surface of the aerosol-generating article. Providing at least a portion of the first electrode on the radial outer surface of the aerosol-generating article may facilitate contact between the first electrode and the first electrical contact of the aerosol-generating device.

In some second embodiments, the first electrode extends on one side of the aerosol-generating article.

In some preferred second embodiments, the first electrode substantially circumscribes the aerosol-forming substrate. The first electrode may be substantially annular. Providing an annular first electrode may enable the first electrode to contact the first electrical contact of the aerosol-generating device regardless of the rotational orientation of the aerosol-generating article within the cavity.

In some particularly preferred second embodiments, the aerosol-generating article further comprises a wrapper wrapped around the aerosol-forming substrate, and at least a portion of the first electrode is provided on an outer surface of the wrapper. Advantageously, providing the first electrode on an outer surface of the wrapper may substantially prevent water present in the aerosol-forming substrate from contacting the first electrode.

In some preferred second embodiments, the aerosol-generating device further comprises a first electrical contact for contacting the first electrode when the aerosol-generating article is received within the cavity.

In some preferred second embodiments, the first electrical contact extends on one side of the cavity of the aerosol-generating device.

In some particularly preferred second embodiments, the first electrical contact substantially circumscribes the cavity of the aerosol-generating device. The first electrical contact may be substantially annular. Providing an annular first electrical contact may enable the first electrical contact to contact the first electrode of the aerosol-generating article regardless of the rotational orientation of the aerosol-generating article within the cavity.

In some preferred second embodiments, the second electrode forms part of the at least one heater.

In some particularly preferred second embodiments, the at least one heater comprises an elongate heater arranged for insertion into the aerosol-generating article when the aerosol-generating article is received within the cavity, and the second electrode forms part of the elongate heater. In these particularly preferred second embodiments, the first electrode may substantially circumscribe the aerosol-forming substrate so that at least a portion of the aerosol-forming substrate is positioned between the first electrode and the second electrode when the aerosol-generating article is received within the cavity.

In some preferred third embodiments, the aerosol-generating article comprises the first electrode and the second electrode. In these preferred third embodiments, the first electrode, the second electrode and at least a portion of the aerosol-forming substrate positioned between the first electrode and the second electrode form a capacitor.

In some preferred third embodiments, the first electrode and the second electrode form part of an outer surface of the aerosol-forming substrate. In these embodiments, the first electrode and the second electrode are preferably arranged on opposite sides of the outer surface of the aerosol-generating article. The second electrode is preferably arranged opposite the first electrode. Preferably, the first electrode and the second electrode are substantially identical. Preferably, the second electrode is aligned with the first electrode along the length of the aerosol-generating article.

In some preferred third embodiments, the first electrode and the second electrode form substantially parallel plates, such that the capacitor is a parallel plate capacitor.

In some preferred third embodiments, each one of the first electrode and the second electrode extends around substantially half of the circumference of the aerosol-forming substrate. The first electrode and the second electrode do not extend around half or more than half of the circumference of the aerosol-forming substrate, such that the first electrode and the second electrode do not overlap or contact in any way.

In these preferred third embodiments, the aerosol-generating device comprises: a first electrical contact for contacting the first electrode of the capacitor when the aerosol-generating article is received within the cavity; and a second electrical contact for contacting the second electrode of the capacitor when the aerosol-generating article is received within the cavity.

In some preferred third embodiments, the first electrical contact and the second electrical contact form part of an inner surface of the cavity. In these embodiments, the first electrical contact and the second electrical contact are preferably arranged on opposite sides of the inner surface of the cavity. The second electrical contact is preferably arranged opposite the first electrical contact. Preferably, the first electrical contact and the second electrical contact are substantially identical. The second electrical contact may be aligned with the first electrical contact along the length of the cavity.

In some preferred first embodiments, the first electrical contact and the second electrical contact form substantially parallel plates.

In some preferred first embodiments, each one of the first electrical contact and the second electrical contact extends around substantially half of the circumference of the cavity. The first electrical contact and the second electrical contact do not extend around half or more than half of the circumference of the cavity, such that the first electrical contact and the second electrical contact do not overlap or contact in any way.

Preferably, the at least one heater comprises at least one resistive heating element. Preferably, the at least one heater comprises a plurality of resistive heating elements. Preferably, the resistive heating elements are electrically connected in a parallel arrangement. Advantageously, providing a plurality of resistive heating elements electrically connected in a parallel arrangement may facilitate the delivery of a desired electrical power to the at least one heater while reducing or minimising the voltage required to provide the desired electrical power. Advantageously, reducing or minimising the voltage required to operate the at least one heater may facilitate reducing or minimising the physical size of the power supply.

The at least one heater may comprise an electrically insulating substrate, wherein the at least one resistive heating element is provided on the electrically insulating substrate.

Preferably, the electrically insulating substrate is stable at an operating temperature of the at least one heater. Preferably, the electrically insulating substrate is stable at temperatures of up to about 400 degrees Celsius, more preferably about 500 degrees Celsius, more preferably about 600 degrees Celsius, more preferably about 700 degrees Celsius, more preferably about 800 degrees Celsius. The operating temperature of the at least one heater during use may be at least about 200 degrees Celsius. The operating temperature of the at least one heater during use may be less than about 700 degrees Celsius. The operating temperature of the at least one heater during use may be less than about 600 degrees Celsius. The operating temperature of the at least one heater during use may be less than about 500 degrees Celsius. The operating temperature of the at least one heater during use may be less than about 400 degrees Celsius.

The electrically insulating substrate may be a ceramic material such as Zirconia or Alumina. Preferably, the electrically insulating substrate has a thermal conductivity of less than or equal to about 40 Watts per metre Kelvin, preferably less than or equal to about 20 Watts per metre Kelvin and ideally less than or equal to about 2 Watts per metre Kelvin.

Suitable materials for forming the at least one resistive heating element include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetal® and iron-manganese-aluminium based alloys.

In some embodiments, the at least one resistive heating element comprises one or more stamped portions of electrically resistive material, such as stainless steel. Alternatively, the at least one resistive heating element may comprise a heating wire or filament, for example a Ni-Cr (Nickel-Chromium), platinum, tungsten or alloy wire.

The at least one heater may be arranged for insertion into an aerosol-forming substrate when the aerosol-forming substrate is received within the cavity. The at least one heater may be positioned within the cavity. The at least one heater may be an elongate heater. The elongate heater may be blade-shaped. The elongate at least one heater may be pin-shaped. The elongate heater may be cone-shaped.

In some embodiments, one of the electrodes forms part of the heater. In some of these embodiments, the electrode is provided on an electrically insulating substrate of the heater. The electrode may be provided on the electrically insulating substrate of the heater in a pattern. The pattern may be any suitable pattern for capacitively coupling with the second electrode. In some of these embodiments, the heater comprises one or more resistive heating elements, and the electrode comprises one of the resistive heating elements.

In some preferred embodiments, the aerosol-generating device comprises an extractor. The extractor is configured to at least partially remove an aerosol-generating article from the cavity of the aerosol-generating device. The extractor is movable in the cavity of the aerosol-generating device. Preferably, an extractor is movable in the direction of the length of the cavity of the aerosol-generating device.

In some preferred embodiments, the extractor is tubular. In other words, the extractor comprises a substantially tubular body defining an extractor cavity. The extractor cavity is configured to receive at least a portion of the aerosol-generating article. When the aerosol-generating article is received in the extractor cavity and the extractor is received in the cavity of the aerosol-generating device, the cavity, the extractor and the aerosol-generating article may be coaxially aligned.

An extractor may be particularly desirable in systems comprising aerosol-generating devices having an elongate heater arranged for insertion into the aerosol-generating article. The extractor may facilitate removal of an aerosol-generating article from the elongate heater without breaking the aerosol-generating article.

In some embodiments, the extractor comprises at least one of the first electrode and the second electrode. An electrode forming part of the extractor may be comprised in the extractor in any suitable manner. For example, an electrode forming part of the extractor may be arranged at an outer surface of the extractor, may be arranged at an inner surface of the extractor, in the extractor cavity, or may be embedded in the body of the extractor. Providing at least a portion of an electrode at an outer surface of the extractor may facilitate electrical connection of the electrode to the controller of the device. For example, a portion of an electrode at an outer surface of the extractor may contact an electrical contact on a surface of the cavity of the device. Providing at least a portion of an electrode at an inner surface of the extractor may position the electrode adjacent to an outer surface of an aerosol-generating article received in the extractor cavity, which may improve the sensitivity of the capacitor formed by the first and second electrodes to the water content of the aerosol-forming substrate in the aerosol-generating article

An electrode forming part of the extractor may be connected to the controller of the aerosol-generating device in any suitable manner. In some embodiments, an electrode forming part of an extractor may be connected to the controller of the aerosol-generating device via a flexible circuit. In some embodiments, the aerosol-generating device further comprises an electrical contact for contacting an electrode of the extractor when the extractor is received within the cavity.

In some particularly preferred embodiments: the at least one heater comprises an elongate heater arranged for insertion into the aerosol-generating article when the aerosol-generating article is received within the cavity. In these particularly preferred embodiments, the aerosol-generating device comprises a tubular extractor for extracting the aerosol-generating article from the cavity, the extractor being arrangeable in the cavity and movable in the cavity relative to the elongate heater. In these particularly preferred embodiments, the first electrode forms part of the elongate heater, and the second electrode forms part of the extractor.

In these particularly preferred embodiments, the second electrode may be arranged in the extractor in any suitable position. Preferably, the second electrode is aligned with the first electrode along the length of the cavity when the extractor is received in the cavity.

In some embodiments, at least a portion of the second electrode forms part of the outer surface of the extractor. In some embodiments, at least a portion of the second electrode forms part of the inner surface of the extractor.

The second electrode may extend on one side of the aerosol-generating article. The second electrode may substantially circumscribe the extractor. The second electrode may be substantially annular.

In some of these particularly preferred embodiments, the aerosol-generating device comprises a second electrical contact for contacting the second electrode when the extractor is received in the cavity. The second electrical contact may extend on one side of the cavity of the aerosol-generating device. The second electrical contact may substantially circumscribe the cavity of the aerosol-generating device. The second electrical contact may be substantially annular.

In some particularly preferred embodiments, the first electrode and the second electrode form part of the extractor.

In some of these particularly preferred embodiments, at least a portion of the first electrode and the second electrode form part of an outer surface of the extractor. In some of these particularly preferred embodiments, at least a portion of the first electrode and the second electrode form part of an inner surface of the extractor. In these embodiments, the first electrode and the second electrode are preferably arranged on opposite sides of the extractor. The second electrode is preferably arranged opposite the first electrode. Preferably, the first electrode and the second electrode are substantially identical. Preferably, the second electrode is aligned with the first electrode along the length of the extractor. The first electrode and the second electrode may form substantially parallel plates. Each one of the first electrode and the second electrode may extend around substantially half of the circumference of the extractor.

In some of these particularly preferred embodiments, the aerosol-generating device comprises: a first electrical contact for contacting the first electrode when the extractor is received within the cavity; and a second electrical contact for contacting the second electrode when the extractor is received within the cavity. The first electrical contact and the second electrical contact may form part of an inner surface of the cavity. The first electrical contact and the second electrical contact may be arranged on opposite sides of the inner surface of the cavity. The second electrical contact may be arranged opposite the first electrical contact. The first electrical contact and the second electrical contact may be substantially identical. The second electrical contact may be aligned with the first electrical contact along the length of the cavity. The first electrical contact and the second electrical contact form substantially parallel plates. Each one of the first electrical contact and the second electrical contact may extend around substantially half of the circumference of the cavity.

The aerosol-generating device comprises a controller. The controller may be any suitable controller. The controller may comprise any suitable electrical circuitry and electrical components. Preferably, the controller comprises a processor and a memory. The controller may comprise a microprocessor, which may be a programmable microprocessor.

The aerosol-generating device comprises a power supply. The power supply may be a DC voltage source. In preferred embodiments, the power supply is a battery. For example, the power supply may be a nickel-metal hydride battery, a nickel cadmium battery, or a lithium based battery, for example a lithium-cobalt, a lithium-iron-phosphate or a lithium-polymer battery. The power supply may alternatively be another form of charge storage device such as a capacitor. The power supply may require recharging and may have a capacity that allows for the storage of enough energy for use of the aerosol-generating device with one or more aerosol-forming substrates.

Preferably, the aerosol-generating device comprises a housing. Preferably, the housing at least partially defines the cavity for receiving an aerosol-forming substrate.

Preferably, the aerosol-generating device comprises at least one air inlet in fluid communication with the cavity. In embodiments in which the aerosol-generating device comprises a housing, preferably the housing at least partially defines the at least one air inlet. Preferably, the at least one air inlet is in fluid communication with an upstream end of the cavity. In embodiments in which the at least one heater is an elongate at least one heater positioned within the cavity, preferably the elongate at least one heater extends into the cavity from the upstream end of the cavity.

The aerosol-generating device may comprise a sensor to detect air flow indicative of a consumer taking a puff. The air flow sensor may be an electro-mechanical device. The air flow sensor may be any of: a mechanical device, an optical device, an opto-mechanical device and a micro electro-mechanical systems (MEMS) based sensor. The aerosol-generating device may comprise a manually operable switch for a consumer to initiate a puff.

Preferably, the aerosol-generating device comprises an indicator for indicating when the at least one heater is activated. The indicator may comprise a light, activated when the at least one heater is activated.

The aerosol-generating device may comprise at least one of an external plug or socket and at least one external electrical contact allowing the aerosol-generating device to be connected to another electrical device. For example, the aerosol-generating device may comprise a USB plug or a USB socket to allow connection of the aerosol-generating device to another USB enabled device. For example, the USB plug or socket may allow connection of the aerosol-generating device to a USB charging device to charge a rechargeable power supply within the aerosol-generating device. The USB plug or socket may additionally, or alternatively, support the transfer of data to or from, or both to and from, the aerosol-generating device. Additionally, or alternatively, the aerosol-generating device may be connected to a computer to transfer data to the device, such as new heating profiles for new aerosol-generating articles.

In those embodiments in which the aerosol-generating device comprises a USB plug or socket, the aerosol-generating device may further comprise a removable cover that covers the USB plug or socket when not in use. In embodiments in which the USB plug or socket is a USB plug, the USB plug may additionally or alternatively be selectively retractable within the device.

As used herein, the term "aerosol-generating article" refers to an article comprising an aerosol-forming substrate that, when heated, releases volatile compounds that can form an aerosol.

Preferably, the aerosol-forming substrate is a solid aerosol-forming substrate. Preferably, the aerosol-forming substrate comprises tobacco. Preferably the aerosol-forming substrate is a solid aerosol-forming substrate comprising tobacco. The aerosol-forming substrate may comprise a tobacco-containing material containing volatile tobacco flavour compounds which are released from the substrate upon heating.

The solid aerosol-forming substrate may comprise a plug of tobacco. The plug of tobacco may comprise, for example, one or more of: powder, granules, pellets, shreds, strands, strips or sheets containing one or more of: herb leaf, tobacco leaf, tobacco ribs, expanded tobacco and homogenised tobacco. As used herein, the term 'homogenised tobacco material' denotes a material formed by agglomerating particulate tobacco. Providing homogenised tobacco material may improve aerosol generation, the nicotine content and the flavour profile of the aerosol generated during heating of the aerosol-generating article. Specifically, the process of making homogenised tobacco involves grinding tobacco leaf, which more effectively enables the release of nicotine and flavours upon heating. Where the tobacco plug comprises homogenised tobacco material, the homogenised tobacco material may be in the form of a sheet. As used herein, the term 'sheet' denotes a laminar element having a width and length substantially greater than the thickness thereof.

The solid aerosol-forming substrate may comprise homogenised tobacco material. The solid aerosol-forming material may comprise shreds, strands or strips of homogenised tobacco material. The solid aerosol-forming substrate may comprise a sheet of homogenised tobacco material.

Sheets of homogenised tobacco material may be formed by agglomerating particulate tobacco obtained by grinding or otherwise comminuting one or both of tobacco leaf lamina and tobacco leaf stems. Sheets of homogenised tobacco material may comprise one or more of tobacco dust, tobacco fines and other particulate tobacco by-products formed during, for example, the treating, handling and shipping of tobacco. Sheets of homogenised tobacco material are preferably formed by a casting process of the type generally comprising casting a slurry comprising particulate tobacco and one or more binders onto a conveyor belt or other support surface, drying the cast slurry to form a sheet of homogenised tobacco material and removing the sheet of homogenised tobacco material from the support surface.

The solid aerosol-forming substrate may comprises a gathered sheet of homogenised tobacco material. As used herein, the term 'gathered' is used to describe a sheet that is convoluted, folded, or otherwise compressed or constricted substantially transversely to a longitudinal axis of the aerosol-generating article.

In some preferred embodiments, the aerosol-forming substrate comprises a gathered textured sheet of homogenised tobacco material. As used herein, the term 'textured sheet' denotes a sheet that has been crimped, embossed, debossed, perforated or otherwise deformed. Use of a textured sheet of homogenised tobacco material may advantageously facilitate gathering of the sheet of homogenised tobacco material to form the aerosol-forming substrate. The aerosol-forming substrate may comprise a gathered textured sheet of homogenised tobacco material comprising a plurality of spaced-apart indentations, protrusions, perforations or a combination thereof.

In a particularly preferred embodiment, the aerosol-forming substrate comprises a gathered crimped sheet of homogenised tobacco material. As used herein, the term 'crimped sheet' denotes a sheet having a plurality of substantially parallel ridges or corrugations. Preferably, the substantially parallel ridges or corrugations extend along or parallel to a longitudinal axis of the aerosol-generating article. This advantageously facilitates gathering of the crimped sheet of homogenised tobacco material to form the aerosol-generating article. However, it will be appreciated that crimped sheets of homogenised tobacco material for inclusion in the aerosol-generating article may alternatively or in addition have a plurality of substantially parallel ridges or corrugations that are disposed at an acute or obtuse angle to the longitudinal axis of the aerosol-generating article.

The aerosol-forming substrate may comprise tobacco-containing material and non-tobacco containing material.

The aerosol-forming substrate may comprise an aerosol former. The aerosol-forming substrate may comprise a single aerosol former or a combination of two or more aerosol formers. As used herein, the term 'aerosol former' is used to describe any suitable known compound or mixture of compounds that, in use, facilitates formation of an aerosol and that is substantially resistant to thermal degradation at the operating temperature of the aerosol-generating article. Suitable aerosol-formers include, but are not limited to: polyhydric alcohols, such as propylene glycol, triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as propylene glycol, triethylene glycol, 1,3-butanediol and, most preferred, glycerine. The aerosol-forming substrate may have an aerosol former content of greater than 5 percent on a dry weight basis. The aerosol aerosol-forming substrate may have an aerosol former content of between approximately 5 percent and approximately 30 percent on a dry weight basis. The aerosol-forming substrate may have an aerosol former content of approximately 20 percent on a dry weight basis.

The aerosol-forming substrate preferably comprises homogenised tobacco material, an aerosol-former and water.

The homogenised tobacco material may be provided in sheets which are one of folded, crimped, or cut into strips. In a particularly preferred embodiment, the sheets are cut into strips having a width of between about 0.2 millimetres and about 2 millimetres, more preferably between about 0.4 millimetres and about 1.2 millimetres. In one embodiment, the width of the strips is about 0.9 millimetres.

The aerosol-generating article may have a total length of between approximately 30 millimetres and approximately 100 millimetres. The aerosol-generating article may have an external diameter of between approximately 5 millimetres and approximately 13 millimetres.

The aerosol-generating article may comprise a mouthpiece positioned downstream of the aerosol-forming substrate. The mouthpiece may be located at a downstream end of the aerosol-generating article. The mouthpiece may be a cellulose acetate filter plug. Preferably, the mouthpiece is approximately 7 millimetres in length, but can have a length of between approximately 5 millimetres to approximately 10 millimetres.

The aerosol-forming substrate may have a length of approximately 10 millimetres. The tobacco plug may have a length of approximately 12 millimetres.

The diameter of the aerosol-forming substrate may be between approximately 5 millimetres and approximately 12 millimetres.

In a preferred embodiment, the aerosol-generating article has a total length of between approximately 40 millimetres and approximately 50 millimetres. Preferably, the aerosol-generating article has a total length of approximately 45 millimetres. Preferably, the aerosol-generating article has an external diameter of approximately 7.2 millimetres.

According to a second aspect of the present invention, there is provided an aerosol-generating system comprising: an aerosol-generating article comprising an aerosol-forming substrate, the aerosol-forming substrate being a dielectric material; and an aerosol-generating device. The aerosol-generating device comprises: a power supply; at least one heater; a cavity for receiving the aerosol-generating article; a first electrode and a second electrode; and a controller. The second electrode is spaced apart from the first electrode so that at least a portion of the aerosol-forming substrate is received between the first electrode and the second electrode. The first electrode, the portion of the aerosol-forming substrate and the second electrode form a capacitor when the aerosol-generating article is received within the cavity. The controller is configured to: control a supply of power from the power supply to the at least one heater for heating the aerosol-forming substrate when the aerosol-generating article is received within the cavity. The controller is further configured to: measure the capacitance of the capacitor via the first and second electrodes when the aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to a third aspect of the present invention, there is provided an aerosol-generating system comprising: an aerosol-generating article; and an aerosol-generating device. The aerosol-generating article comprises: an aerosol-forming substrate, the aerosol-forming substrate being a dielectric material; and a first electrode. The aerosol-generating device comprises: a power supply; at least one heater; and a cavity for receiving the aerosol-generating article. The aerosol-generating device further comprises: a first electrical contact for contacting the first electrode when the aerosol-generating article is received within the cavity; a controller; and a second electrode. When the aerosol-generating article is received within the cavity, at least a portion of the aerosol-forming substrate is positioned between the first electrode and the second electrode so that the first electrode, the portion of the aerosol-forming substrate and the second electrode form a capacitor. The controller of the aerosol-generating device is configured to control a supply of power from the power supply to the at least one heater for heating the aerosol-forming substrate when the aerosol-generating article is received within the cavity. The controller of the aerosol-generating device is further configured to: measure the capacitance of the capacitor via the first electrical contact and the second electrode when the aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to a fourth aspect of the present invention, there is provided an aerosol-generating system comprising: an aerosol-generating article; and an aerosol-generating device. The aerosol-generating article comprises: an aerosol-forming substrate, the aerosol-forming substrate being a dielectric material; and a capacitor comprising a first electrode, a second electrode, and at least a portion of the aerosol-forming substrate positioned between the first electrode and the second electrode. The aerosol-generating device comprises: a power supply; at least one heater; and a cavity for receiving the aerosol-generating article. The aerosol-generating device further comprises: a first electrical contact for contacting the first electrode of the capacitor when the aerosol-generating article is received within the cavity; a second electrical contact for contacting the second electrode of the capacitor when the aerosol-generating article is received within the cavity; and a controller. The controller is configured to control a supply of power from the power supply to the at least one heater for heating the aerosol-forming substrate when the aerosol-generating article is received within the cavity. The controller is further configured to: measure the capacitance of the capacitor via the first and second electrical contacts when the aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to a fifth aspect of the present invention, there is provided the aerosol-generating device of the second aspect of the present invention. In other words, there is provided an aerosol-generating device comprising: a power supply; at least one heater; a cavity for receiving an aerosol-generating article; a first electrode and a second electrode; and a controller. The second electrode is spaced apart from the first electrode so that at least a portion of an aerosol-generating article is received between the first electrode and the second electrode when an aerosol-generating article is received within the cavity. The controller is configured to control a supply of power from the power supply to the at least one heater for heating an aerosol-generating article when an aerosol-generating article is received within the cavity. The controller is further configured to: measure the capacitance across the first electrode and the second electrode when an aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to a sixth aspect of the present invention, there is provided the aerosol-generating device of the third aspect of the present invention. In other words, there is provided an aerosol-generating device comprising: a power supply; at least one heater; a cavity for receiving an aerosol-generating article; a first electrode; an electrical contact; and a controller. The electrical contact is spaced apart from the first electrode so that a second electrode of an aerosol-generating article can contact the electrical contact when an aerosol-generating article is received within the cavity with at least a portion of the aerosol-generating article is received between the first electrode and the second electrode. The controller is configured to control a supply of power from the power supply to the at least one heater for heating an aerosol-generating article when an aerosol-generating article is received within the cavity. The controller is further configured to: measure the capacitance across the first electrode and a second electrode in contact with the electrical contact when an aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to a seventh aspect of the present invention, there is provided the aerosol-generating device of the fourth aspect of the present invention. In other words, there is provided an aerosol-generating device comprising: a power supply; at least one heater; a cavity for receiving an aerosol-generating article; a first electrical contact and a second electrical contact spaced apart from the first electrical contact; and a controller. The first electrical contact and the second electrical contact are arranged so that a first electrode of an aerosol-generating article can contact the first electrical contact and a second electrode of the aerosol-generating article can contact the second electrical contact when an aerosol-generating article is received within the cavity with at least a portion of the aerosol-generating article being received between the first electrode and the second electrode. The controller is configured to control a supply of power from the power supply to the at least one heater for heating an aerosol-generating article when an aerosol-generating article is received within the cavity. The controller is further configured to: measure the capacitance across the first electrical contact and the second electrical contact when an aerosol-generating article is received within the cavity; supply power from the power supply to the at least one heater in a first power profile when the measured capacitance is within a predetermined first range; and supply power from the power supply to the at least one heater in a second power profile, different to the first power profile, when the measured capacitance is within a predetermined second range.

According to an eighth aspect of the present invention, there is provided an aerosol-generating device comprising: a cavity for receiving an aerosol-generating article; an elongate heater arranged for insertion into an aerosol-generating article when an aerosol-generating article is received within the cavity; and a tubular extractor for extracting the aerosol-generating article from the cavity. The extractor is arrangeable in the cavity and movable in the cavity relative to the elongate heater. The aerosol-generating device further comprises: a first electrode and a second electrode; a power supply; and a controller. The second electrode is spaced apart from the first electrode so that at least a portion of an aerosol-generating article is received between the first electrode and the second electrode when an aerosol-generating article is received within the cavity. The first electrode forms part of the elongate heater and the second electrode forms part of the extractor. The controller is configured to: measure the capacitance across the first electrode and the second electrode; and control a supply of power from the power supply to the heater for heating an aerosol-generating article based on the measured capacitance.

According to a ninth aspect of the present invention, there is provided: an aerosol-generating device comprising: a cavity for receiving an aerosol-generating article; an elongate heater arranged for insertion into an aerosol-generating article when an aerosol-generating article is received within the cavity; and a tubular extractor for extracting the aerosol-generating article from the cavity. The extractor is arrangeable in the cavity and movable in the cavity relative to the elongate heater. The aerosol-generating device further comprises: a first electrode and a second electrode; a power supply; and a controller. The second electrode is spaced apart from the first electrode so that at least a portion of an aerosol-generating article is received between the first electrode and the second electrode when an aerosol-generating article is received within the cavity. The first electrode and the second electrode form part of the extractor. The controller is configured to: measure the capacitance across the first electrode and the second electrode; and control a supply of power from the power supply to the heater for heating an aerosol-generating article based on the measured capacitance.

The invention is defined in the claims. However, below there is provided a non-exhaustive list of non-limiting clauses. Any one or more of the features of these clauses may be combined with any one or more features of another clause described herein.

1. An aerosol-generating system comprising:

an aerosol-generating article comprising an aerosol-forming substrate, the aerosol-forming substrate being a dielectric material, and the aerosol-forming substrate being substantially solid;
and aerosol-generating device comprising:

a power supply;

at least one heater;

a cavity for receiving the aerosol-generating article; and

a controller configured to control a supply of power from the power supply to the at least one heater for heating the aerosol-forming substrate when the aerosol-generating article is received within the cavity; and

a first electrode and a second electrode spaced apart from the first electrode so that at least a portion of the aerosol-forming substrate is received between the first electrode and the second electrode when the aerosol-generating article is received within the cavity, the first electrode, the portion of the aerosol-forming substrate and the second electrode form a capacitor when the aerosol-generating article is received within the cavity,

wherein the controller of the aerosol-generating device is further configured to:

measure the capacitance of the capacitor via the first and second electrodes when the aerosol-generating article is received within the cavity;

supply power from the power supply to the at least one heater in a first power profile when the measured capacitance is within a predetermined first range; and

supply power from the power supply to the at least one heater in a second power profile, different to the first power profile, when the measured capacitance is within a predetermined second range.

2. An aerosol-generating system according to clause 1, wherein the aerosol-generating device comprises the first electrode and the second electrode.

3. An aerosol-generating system according to clause 2, wherein at least one of the first electrode and the second electrode forms part of the at least one heater.

4. An aerosol-generating system according to clause 3, wherein the at least one heater comprises an elongate heater arranged for insertion into the aerosol-generating article when the aerosol-generating article is received within the cavity, wherein the first electrode forms part of the elongate heater, and wherein the second electrode is on an inner surface of the cavity.

5. An aerosol-generating system according to clause 3, wherein the at least one heater comprises an elongate heater arranged for insertion into the aerosol-generating article when the aerosol-generating article is received within the cavity, wherein the first electrode forms part of the elongate heater, wherein the aerosol-generating device comprises a tubular extractor for extracting the aerosol-generating article from the cavity, the extractor being arrangeable in the cavity and movable in the cavity relative to the elongate heater, and wherein the second electrode forms part of the extractor.

6. An aerosol-generating system according to clauses 4 or 5, wherein the second electrode has a substantially annular shape so that the second electrode circumscribes at least a portion of the aerosol-generating article when the aerosol-generating article is received within the cavity.

7. An aerosol-generating system according to clause 1, wherein:

The aerosol-generating article comprises the first electrode; and

the aerosol-generating device comprises:

a first electrical contact for contacting the first electrode when the aerosol-generating article is received within the cavity; and

the second electrode.

8. An aerosol-generating system according to clause 7, wherein the aerosol-generating article further comprises a wrapper wrapped around the aerosol-forming substrate, and wherein at least a portion of the first electrode is provided on an outer surface of the wrapper.

9. An aerosol-generating system according to clauses 7 or 8, wherein the second electrode forms part of the at least one heater.

10. An aerosol-generating system according to clause 9, wherein the at least one heater comprises an elongate heater arranged for insertion into the aerosol-generating article when the aerosol-generating article is received within the cavity, wherein the second electrode forms part of the elongate heater, and wherein the first electrode substantially circumscribes the aerosol-forming substrate so that at least a portion of the aerosol-forming substrate is positioned between the first electrode and the second electrode when the aerosol-generating article is received within the cavity.

11. An aerosol-generating system according to clause 1, wherein:

the aerosol-generating article comprises the first electrode and the second electrode, the first electrode, the second electrode and at least a portion of the aerosol-forming substrate positioned between the first electrode and the second electrode to form a capacitor; and

the aerosol-generating device comprises:

a first electrical contact for contacting the first electrode of the capacitor when the aerosol-generating article is received within the cavity; and

a second electrical contact for contacting the second electrode of the capacitor when the aerosol-generating article is received within the cavity.

12. An aerosol-generating system according to any preceding clause, wherein the controller is further configured to measure the capacitance before supplying power from the power supply to the at least one heater for heating the aerosol-forming substrate.

13. An aerosol-generating device comprising:

a power supply;

at least one heater;

a cavity for receiving an aerosol-generating article, the aerosol-generating article comprising an aerosol-forming substrate, the aerosol-forming substrate being a dielectric material, and the aerosol-forming substrate being substantially solid;

a first electrode and a second electrode spaced apart from the first electrode so that at least a portion of an aerosol-generating article is received between the first electrode and the second electrode when an aerosol-generating article is received within the cavity; and

a controller configured to:

control a supply of power from the power supply to the at least one heater for heating an aerosol-generating article when an aerosol-generating article is received within the cavity;

measure the capacitance across the first electrode and the second electrode when an aerosol-generating article is received within the cavity;

supply power from the power supply to the at least one heater in a first power profile when the measured capacitance is within a predetermined first range; and

supply power from the power supply to the at least one heater in a second power profile, different to the first power profile, when the measured capacitance is within a predetermined second range.

14. An aerosol-generating device comprising:

a power supply;

at least one heater;

a cavity for receiving an aerosol-generating article, the aerosol-generating article comprising an aerosol-forming substrate, the aerosol-forming substrate being a dielectric material, and the aerosol-forming substrate being substantially solid;

a first electrode; and

an electrical contact spaced apart from the first electrode so that a second electrode of an aerosol-generating article can contact the electrical contact when an aerosol-generating article is received within the cavity and at least a portion of the aerosol-generating article is received between the first electrode and the second electrode; and

a controller configured to:

control a supply of power from the power supply to the at least one heater for heating an aerosol-generating article when an aerosol-generating article is received within the cavity;

measure the capacitance across the first electrode and a second electrode in contact with the electrical contact when an aerosol-generating article is received within the cavity;

supply power from the power supply to the at least one heater in a first power profile when the measured capacitance is within a predetermined first range; and

supply power from the power supply to the at least one heater in a second power profile, different to the first power profile, when the measured capacitance is within a predetermined second range.

15. An aerosol-generating device comprising:

a power supply;

at least one heater;

a cavity for receiving an aerosol-generating article, the aerosol-generating article comprising an aerosol-forming substrate, the aerosol-forming substrate being a dielectric material, and the aerosol-forming substrate being substantially solid;

a first electrical contact and a second electrical contact spaced apart from the first electrical contact, the first electrical contact and the second electrical contact being arranged so that a first electrode of an aerosol-generating article can contact the first electrical contact and a second electrode of the aerosol-generating article can contact the second electrical contact when an aerosol-generating article is received within the cavity with at least a portion of the aerosol-generating article being received between the first electrode and the second electrode; and

a controller configured to:

control a supply of power from the power supply to the at least one heater for heating an aerosol-generating article when an aerosol-generating article is received within the cavity;

measure the capacitance across the first electrical contact and the second electrical contact when an aerosol-generating article is received within the cavity;

supply power from the power supply to the at least one heater in a first power profile when the measured capacitance is within a predetermined first range; and

supply power from the power supply to the at least one heater in a second power profile, different to the first power profile, when the measured capacitance is within a predetermined second range.

It will be appreciated that features described in relation to one aspect of the present invention may also be applied equally to the other aspects of the present invention. In particular, features described in relation to the first aspect of the present invention may be applied equally to the second, third, fourth fifth, sixth, seventh, eighth and ninth aspects of the present invention, and vice versa.

The invention will be further described, by way of example only, with reference to the accompanying drawings, in which:

Figure 1 shows a cross-sectional view of an aerosol-generating device in accordance with a first embodiment of the present invention;

Figure 2 shows a cross-sectional view of an aerosol-generating article for use with the aerosol-generating device of Figure 1;

Figure 3 shows a cross-sectional view of the aerosol-generating device of Figure 1 combined with the aerosol-generating article of Figure 2 to form an aerosol-generating system;

Figure 4 shows a cross-sectional view of a tubular extractor for an aerosol-generating device in accordance with a second embodiment of the present invention;

Figure 5 shows a cross-sectional view of an aerosol-generating device in accordance with the second embodiment of the present invention, including the tubular extractor of Figure 4;

Figure 6 shows a cross-sectional view of the aerosol-generating device of Figure 5 combined with the aerosol-generating article of Figure 2 to form an aerosol-generating system;

Figure 7 shows a cross-sectional view of an aerosol-generating device in accordance with a third embodiment of the present invention;

Figure 8 shows a cross-sectional view of an aerosol-generating article for use with an aerosol-generating device of Figure 7;

Figure 9 shows a cross-sectional view of the aerosol-generating device of Figure 7 combined with the aerosol-generating article of Figure 8 to form an aerosol-generating system;

Figure 10 shows a cross-sectional view of an aerosol-generating device in accordance with a third embodiment of the present invention;

Figure 11 shows a cross-sectional view of an aerosol-generating article for use with the aerosol-generating device of Figure 10; and

Figure 12 shows a cross-sectional view of the aerosol-generating device of Figure 10 combined with the aerosol-generating article of Figure 11 to form an aerosol-generating system.

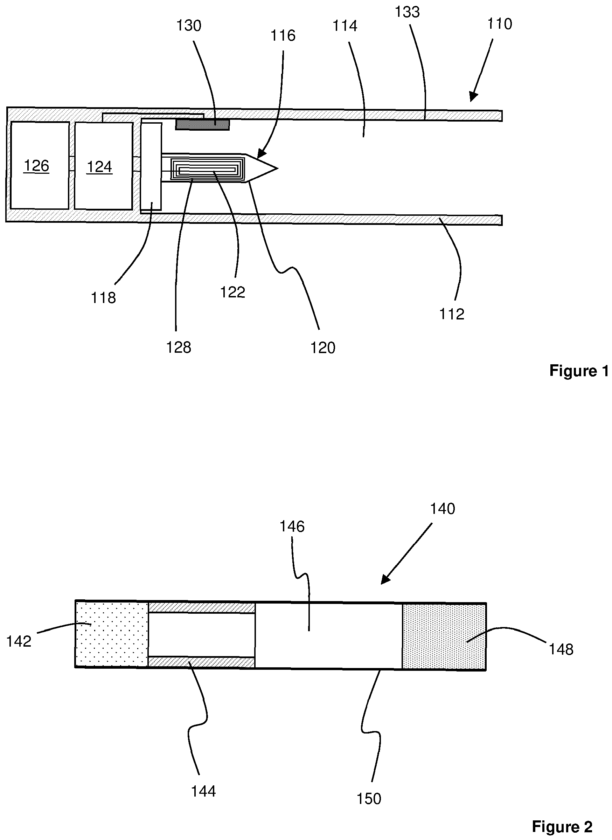

Figure 1 shows an aerosol-generating device 110 comprising a housing 112, the housing 112 defining a cavity 114 for receiving an aerosol-generating article. The device 110 includes a heater 116 comprising a base portion 118 and an elongate heater blade 120 that penetrates an aerosol-generating article when the aerosol-generating article is inserted into the cavity 114. The heater blade 120 comprises a resistive heating coil 122 for resistively heating the upstream end of an aerosol-generating article inserted into the cavity 114. A controller 124 controls the operation of the device 110, including the supply of electrical current from a power supply 126, in the form of a lithium iron phosphate battery, to the resistive heating coil 122 of the heater blade 120.

The resistive heating coil 122 also forms a first electrode 128. A second electrode 130 is provided on a cylindrical inner surface 133 of the cavity 114. In Figure 1, the second electrode 130 is shown at one side of the cavity 114. However, it will be appreciated that in other embodiments the second electrode 130 may be an annular electrode, circumscribing the inner surface 133 of the cavity 114.

Figure 2 shows an aerosol-generating article 140 for use in the aerosol-generating device 110 of Figure 1. The aerosol-generating article 140 comprises an aerosol-forming substrate 142, a hollow acetate tube 144, a polymeric filter 146, a mouthpiece 148 and an outer wrapper 150. The aerosol-forming substrate 142 comprises a plug of tobacco and the mouthpiece 148 comprises a plug of cellulose acetate fibres.

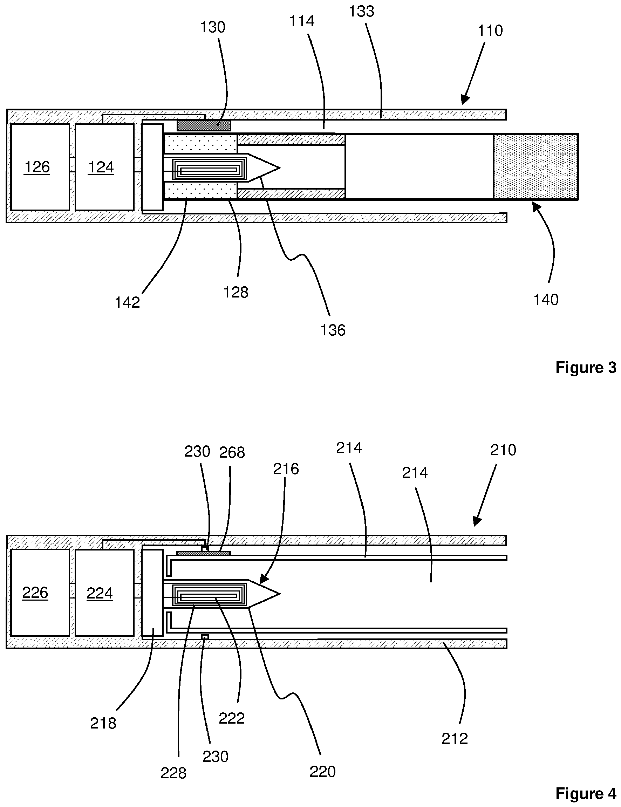

Figure 3 shows the aerosol-generating article 140 inserted into the cavity 114 of the aerosol-generating device 110. Upon insertion of the article 140 into the cavity 114, a pointed tip 136 of the heater blade 120 penetrates the aerosol-forming substrate 142 and the aerosol-forming substrate 142 is received over the heater blade 120 so that a portion of the aerosol-forming substrate 142 is positioned between the first electrode 128 and the second electrode 130 when the aerosol-generating article 140 is fully received in the cavity 114. In this position, when the aerosol-generating article 140 is received in the cavity 114, the first electrode 128, the portion of the aerosol-forming substrate 142 between the first electrode 128 and the second electrode 130 and the second electrode 130 form a capacitor. The dielectric material of the capacitor is formed by the portion of the aerosol-forming substrate 142 positioned between the first and second electrodes.

The controller 124 is configured to supply power from the power supply 126 to the heater blade 120 in a heating cycle, to heat the aerosol-forming substrate 142 sufficiently for an aerosol to be generated.

When the aerosol-generating article 140 is received in the cavity 114 of the device 110, and before the controller 124 supplies power from the power supply 126 to the heater blade 120 to heat the aerosol-forming substrate 142 in a heating cycle, the controller 124 measures the capacitance of the capacitor formed from the first electrode 128, a portion of the aerosol-forming substrate 142 and the second electrode 130. The measured capacitance provides an indication of the amount of water that is in the portion of the aerosol-forming substrate 142 between the first electrode 128 and the second electrode 130.

The controller 124 is configured to use the measured capacitance to adjust the power supplied from the power supply 126 to the heater blade 120 in the heating cycle. Adjusting the power supplied to the heater 120 adjusts the temperature to which the heater blade 120 is heated in the heating cycle. The controller 124 is configured to compare the measured capacitance to a predetermined threshold stored in a memory of the controller, and to adjust the power supplied from the power supply 126 to the heater blade 120 based on the comparison. Accordingly, the controller 124 is configured to supply a first power to the heater blade 120 if the capacitance indicates that the amount of water in the aerosol-forming substrate is below the predetermined threshold and the controller 124 is configured to supply a second power to the heater blade 120, lower than the first power, if the capacitance indicates that the amount of water in the aerosol-forming substrate is above the predetermined threshold. In other words, the controller 124 applies a first power to the heater blade 120 when the capacitance is within a first range; and the controller 124 applies a second power, lower than the first power, to the heater blade 120 when the capacitance is within a second range, higher than the first range.

Figure 4 shows an aerosol-generating device 210 according to a second embodiment of the present invention. The aerosol-generating device 210 is substantially similar to the aerosol-generating device 110 of Figure 1, and like reference numerals are used to describe like features. The aerosol-generating device 210 comprises a housing 212, the housing 212 defining a cavity 214 for receiving the aerosol-generating article 140 of Figure 2. The device 210 includes a heater 216 comprising a base portion 218 and an elongate heater blade 220 that penetrates an aerosol-generating article when the aerosol-generating article is inserted into the cavity 214. The heater blade 220 comprises a resistive heating coil 222 for resistively heating the upstream end of an aerosol-generating article inserted into the cavity 214. A controller 224 controls the operation of the device 210, including the supply of electrical current from a power supply 226, in the form of a lithium iron phosphate battery, to the resistive heating coil 222 of the heater blade 220.

The resistive heating coil 222 also forms a first electrode 228. An electrical contact 230 is provided on a cylindrical inner surface 233 of the cavity 214, at a position radially outward of the first electrode 228. In Figure 4, the connector 230 is shown at one side of the cavity 214. However, it will be appreciated that in other embodiments the electrical contact 230 may be an annular contact, circumscribing the inner surface 233 of the cavity 214.

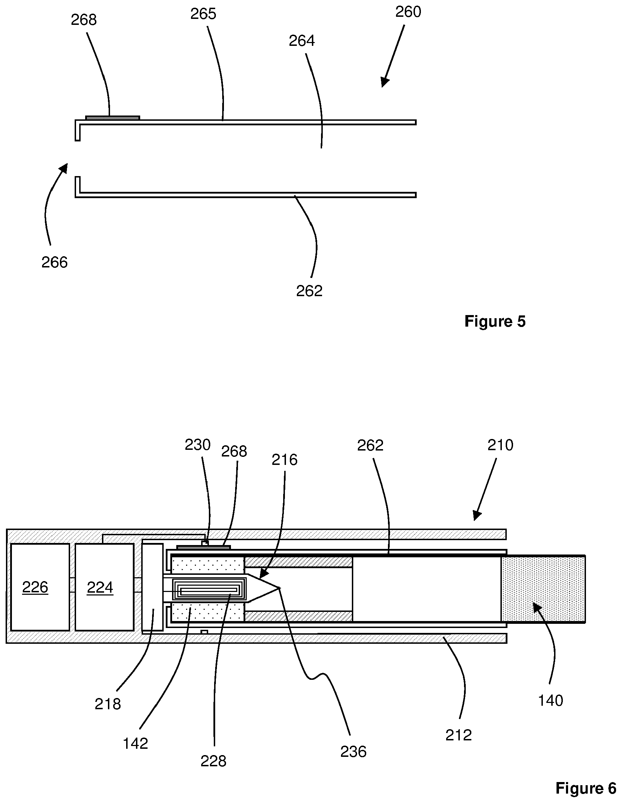

The aerosol-generating device 210 further comprises a tubular extractor 260 slidably receivable in the cavity 214. The tubular extractor 260 is shown in the device 210 in Figures 4 and 6 and is shown removed from the device 210 in Figure 5.

The tubular extractor 260 comprises a generally cylindrical tubular housing 262, the housing 262 having an open end for receiving the aerosol-generating article 140 and a partially closed end 266 having a slit for slidably receiving the heater blade 220 when the extractor 260 is received in the cavity 214. The extractor 260 has a cylindrical inner surface defining an extractor cavity 264, which is sized to slidably receive the aerosol-generating article 140, and a cylindrical outer surface 265, which is substantially similar to the inner surface 233 of the cavity 214 so that the extractor 260 is slidably receivable in the cavity 214.

The extractor 260 reduces the forces experienced by the aerosol-generating article 140 when the article 140 is removed from the cavity 214 compared to an article removed from the cavity of a system without a tubular extractor. This reduces the likelihood of the aerosol-generating article 140 breaking when it is removed from the cavity 214. As an example, when the extractor 260 is slid out of the cavity 214 to remove the article 140 from the cavity 214, the housing 262 of the extractor 260 protects the wrapper 150 of the article 140 from rubbing against the inner surface 233 of the cavity. As another example, the partially closed end 266 of the extractor 260 pushes against the end face of the article 140 as the article 140 is removed from the cavity 214 by the extractor, which reduces or eliminate tension on the wrapper 150 as the article is removed from the cavity 214.

The device 210 further comprises a second electrode 268 arranged on a portion of the outer surface 265 of the housing 262 of the extractor 260. The second electrode 268 is arranged on the outer surface 265 of the housing 262 of the extractor 260 and is arranged to contact the electrical contact 230 on the inner surface 133 of the cavity 114 when the extractor 260 is received in the cavity 214 and the heater blade 220 extends into the slot at the partially closed end 266 of the extractor 260.

In this embodiment, the second electrode 268 is annular so that it contacts the electrical contact 230 regardless of the rotational orientation of the extractor 260 within the cavity 214. It will be appreciated that in other embodiments, the contact 230 may be annular, rather than the second electrode 268, or both the contact 230 and the second electrode 268 may be annular.

When the second electrode 268 contacts the electrical contact 230, the second electrode 268 becomes electrically connected to the controller 224 of the device 210. It will be appreciated that in some embodiments at least a portion of the second electrode 268 may be arranged at the inner surface of the extractor housing 262 and in some embodiments at least a portion of the tubular housing 262 of the extractor 260 may form the second electrode 268.

Figure 6 shows the aerosol-generating article 140 inserted into the extractor cavity 264 and the extractor 260 and article 140 inserted into the cavity 214 of the aerosol-generating device 210. Upon insertion of the article 140 and extractor 260 into the cavity 214, a pointed tip 236 of the heater blade 220 is received in the slot in the partially closed end 266 of the extractor 260 and penetrates the aerosol-forming substrate 142. The aerosol-forming substrate 142 is received over the heater blade 220 so that a portion of the aerosol-forming substrate 142 is positioned between the first electrode 228 and the second electrode 268 when the aerosol-generating article 140 is fully received in the extractor cavity 264 and the extractor 260 and article 140 are fully received in the cavity 114. In this position, the first electrode 228, the portion of the aerosol-forming substrate 142 between the first electrode 228 and the second electrode 268 and the second electrode 268 form a capacitor. The dielectric material of the capacitor is formed by the portion of the aerosol-forming substrate 142 positioned between the first and second electrodes.

The controller 224 of the device 210 is configured to measure the capacitance of the capacitor formed by the first electrode 228, the portion of the aerosol-forming substrate 142 between the first electrode 228 and the second electrode 268 and the second electrode 268 in the manner described above with reference to the device 110 shown in Figure 1.

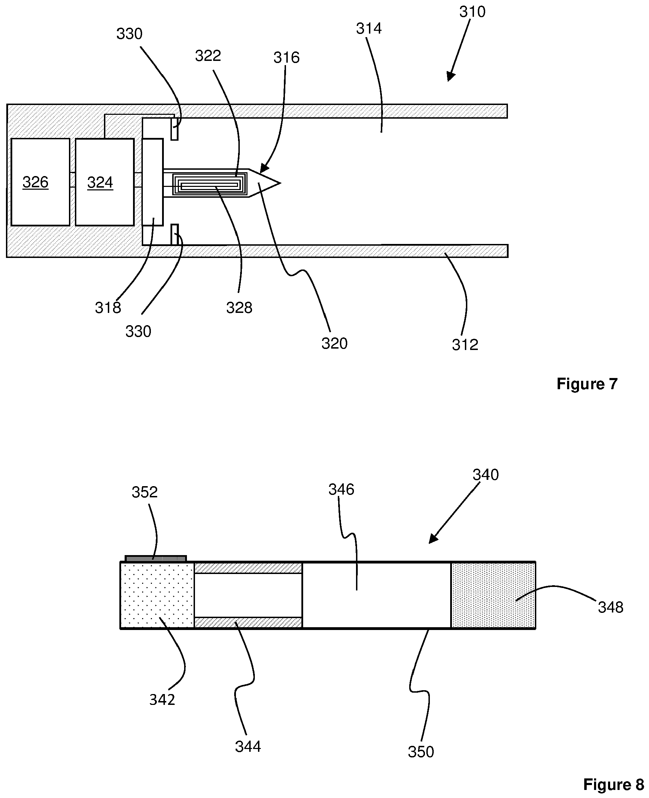

Figure 7 shows an aerosol-generating device 310 according to a third embodiment of the present invention. The aerosol-generating device 310 is substantially similar to the aerosol-generating device 110 of Figures 1, and like reference numerals are used to describe like features. The aerosol-generating device 310 comprises a housing 312, the housing 312 defining a cavity 314 for receiving an aerosol-generating article. The device 310 includes a heater 316 comprising a base portion 318 and an elongate heater blade 320 that penetrates an aerosol-generating article when an aerosol-generating article is inserted into the cavity 314. The heater blade 320 comprises a resistive heating coil 322 for resistively heating the upstream end of an aerosol-generating article inserted into the cavity 314. A controller 324 controls the operation of the device 310, including the supply of electrical current from a battery 326, in the form of a lithium iron phosphate battery, to the resistive heating coil 322 of the heater blade 320.

The resistive heating coil 322 also forms a first electrode 328. An annular electrical contact 330 is provided on a cylindrical inner surface 133 of the cavity 314, at a position in line with the first electrode 328 along the length of the cavity 314.

Figure 8 shows an aerosol-generating article 340 for use in the aerosol-generating device 310 of Figure 7. The aerosol-generating article 340 comprises an aerosol-forming substrate 342, a hollow acetate tube 344, a polymeric filter 346, a mouthpiece 348 and an outer wrapper 350. The aerosol-forming substrate 342 comprises a plug of tobacco and the mouthpiece 348 comprises a plug of cellulose acetate fibres.

The aerosol-generating article 340 further comprises a second electrode 352 secured to the outer wrapper 350 adjacent to the aerosol-forming substrate 342. For clarity, the thickness of the first electrode 352 has been exaggerated in Figure 8.

The electrical contact 330 is positioned to contact the second electrode 352 when the aerosol-generating article 340 is fully inserted into the cavity 314. The electrical contact 330 is annular so that it contacts the second electrode 352 regardless of the rotational orientation of the aerosol-generating article 340 within the cavity 314. It will be appreciated that in other embodiments, the second electrode 352 may be annular, rather than the electrical contact 330, or both the electrical contact 330 and the second electrode 352 may be annular.

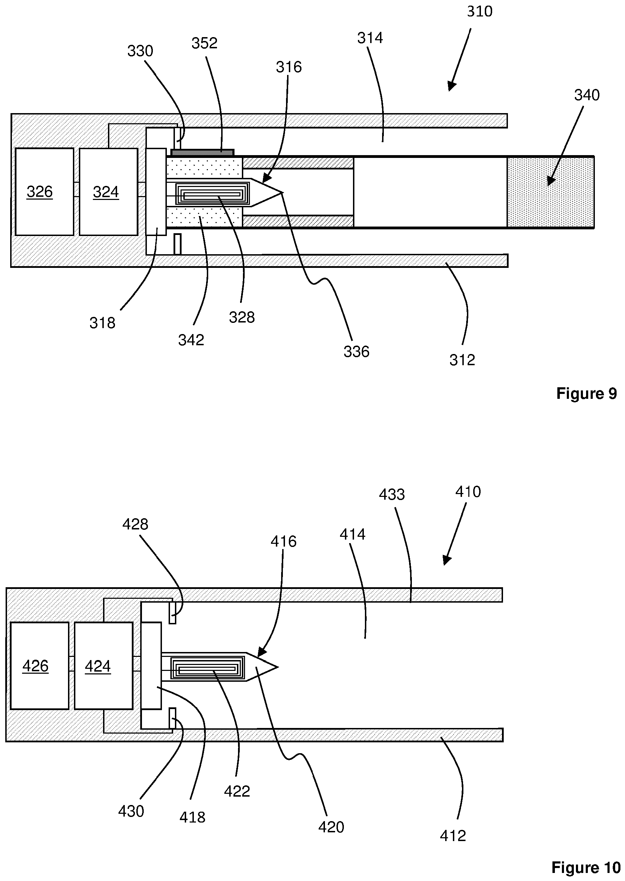

Figure 9 shows the aerosol-generating article 340 inserted into the cavity 314 of the aerosol-generating device 310. Upon insertion of the article 340 into the cavity 314, a pointed tip 336 of the heater blade 320 penetrates the aerosol-forming substrate 342 and the aerosol-forming substrate 342 is received over the heater blade 320 so that a portion of the aerosol-forming substrate 342 is positioned between the first electrode 328 and the second electrode 330 when the aerosol-generating article 340 is fully received in the cavity 314. In this position, when the aerosol-generating article 340 is received in the cavity 314, the first electrode 328, the portion of the aerosol-forming substrate 342 between the first electrode 328 and the second electrode 352 and the second electrode 352 form a capacitor. The dielectric material of the capacitor is formed by the portion of the aerosol-forming substrate 342 positioned between the first and second electrodes.

The controller 324 of the device 310 is configured to measure the capacitance of the capacitor formed by the first electrode 328, the portion of the aerosol-forming substrate 342 between the first electrode 328 and the second electrode 352 and the second electrode 352 in the manner described above with reference to the device 110 shown in Figure 1.

Figure 10 shows an aerosol-generating device 410 according to a fourth embodiment of the present invention. The aerosol-generating device 410 is substantially similar to the aerosol-generating device 110 of Figures 1, and like reference numerals are used to describe like features. The aerosol-generating device 410 comprises a housing 412, the housing 412 defining a cavity 414 for receiving an aerosol-generating article. The device 410 includes a heater 416 comprising a base portion 418 and an elongate heater blade 420 that penetrates an aerosol-generating article when an aerosol-generating article is inserted into the cavity 414. The heater blade 420 comprises a resistive heating coil 422 for resistively heating the upstream end of an aerosol-generating article inserted into the cavity 414. A controller 424 controls the operation of the device 410, including the supply of electrical current from a battery 426, in the form of a lithium iron phosphate battery, to the resistive heating coil 422 of the heater blade 420.

In this embodiment, the resistive heating coil 422 does not form a first electrode. A first electrical contact 428 is provided on a cylindrical inner surface 433 of the cavity 414, at a position in line with the resistive heating coil 422 along the length of the cavity 414. A second electrical contact 430 is also provided on the cylindrical inner surface 433, opposite the first electrical contact 428. Both the first and second electrical contacts are electrically connected to the controller 424 of the device 410.

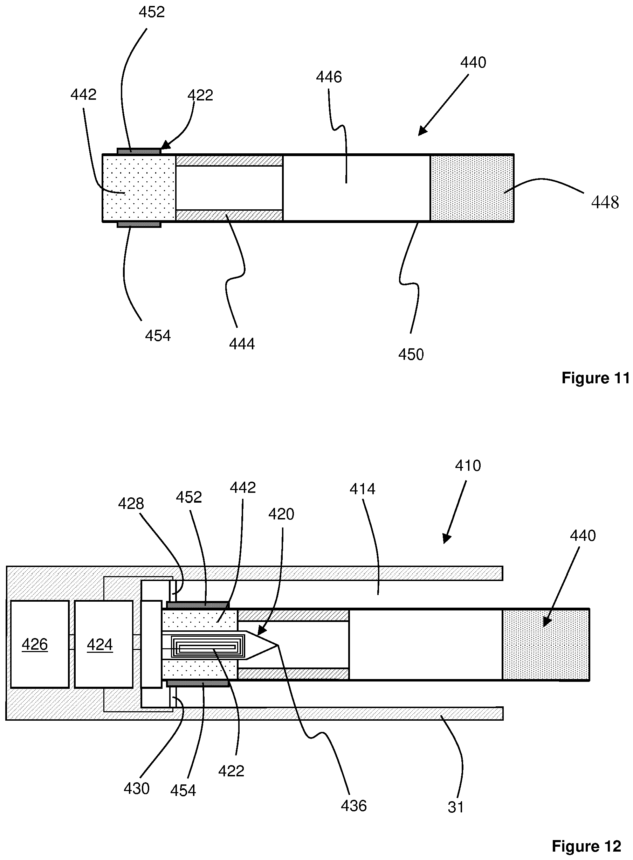

Figure 11 shows an aerosol-generating article 440 for use in the aerosol-generating device 410 of Figure 10. The aerosol-generating article 440 comprises an aerosol-forming substrate 442, a hollow acetate tube 444, a polymeric filter 446, a mouthpiece 448 and an outer wrapper 450. The aerosol-forming substrate 442 comprises a plug of tobacco and the mouthpiece 448 comprises a plug of cellulose acetate fibres.

The aerosol-generating article 440 further comprises a first electrode 452 secured to one side of the outer wrapper 450, adjacent to the aerosol-forming substrate 442. The aerosol-generating article 440 also comprises a second electrode 454 secured to the opposite side of the outer wrapper 450, adjacent to the aerosol-forming substrate 442. The first and second electrodes are substantially identical, each forming an arcuate electrode extending around slightly less than half of the circumference of the article 440, such that the electrodes do not overlap or contact in any way. The first electrode 452, the portion of the aerosol-forming substrate 442 between the first electrode 428 and the second electrode 452 and the second electrode 452 form a capacitor. The dielectric material of the capacitor is formed by the portion of the aerosol-forming substrate 442 positioned between the first and second electrodes.

For clarity, the thickness of the first and second electrodes has been exaggerated in Figure 11.

The first electrical contact 428 of the device 410 is positioned to contact one of the first electrode 452 and the second electrode 454 of the article 440, and the second electrical contact 430 of the device 410 is positioned to contact the other one of the first electrode 452 and the second electrode 454 of the article 440 when the aerosol-generating article 440 is fully inserted into the cavity 414. The first and second electrodes each extend around substantially half of the circumference of the article 440 so each of the first and second contacts of the device 410 is in contact with one of the electrodes of the article 440 regardless of the rotational orientation of the aerosol-generating article 440 within the cavity 414.

Figure 12 shows the aerosol-generating article 440 inserted into the cavity 414 of the aerosol-generating device 410. Upon insertion of the article 440 into the cavity 414, a pointed tip 436 of the heater blade 420 penetrates the aerosol-forming substrate 442 and the aerosol-forming substrate 442 is received over the heater blade 420 so that one of the first and second electrical contacts the first electrode 452 and the other one of the first and second electrical contacts the second electrode 454 when the aerosol-generating article 340 is fully received in the cavity 414.

The controller 424 of the device 410 is configured to measure the capacitance of the capacitor formed by the first electrode 452, the portion of the aerosol-forming substrate 442 between the first electrode 452 and the second electrode 454 and the second electrode 454 in the manner described above with reference to the device 110 shown in Figure 1.

The controllers of the aerosol-generating devices described above may not necessarily be configured to determine the volume fraction of water present in the aerosol-forming substrate. A predetermined relationship between capacitance and the volume fraction of water present in the aerosol-forming substrate may be used to determine thresholds against which the measured capacitance may be compared to determine the power to be supplied to the heater. However, in some embodiments the controller may be configured to determine the volume fraction of water in the aerosol-forming substrate between the first and second electrodes. In these embodiments, the volume fraction of water in the aerosol-forming substrate may be calculated as follows.

The relative permittivity of a material is typically a function of temperature and frequency of an applied electric field. The relative permittivity of water may be assumed to be about 80 at temperatures of around 20 degrees Celsius and at applied frequencies of between around 100 kHz and 1 GHz.

Where the geometry of the electrodes and the material between the electrodes is known, the bulk relative permeability of the materials between the electrodes can be determined. Furthermore, if the materials between the electrodes are known, along with their respective relative permittivities, the volume fraction of the materials between the electrodes may be determined from measurements of the capacitance.

As an example, the Landau-Lifshitz-Looyenga dielectric mixture equation may be used to determine the relative permittivity of a mixture of two constituents of individual dielectric constants, as shown in Equation 1 below:

$$\varepsilon_{bulk} = \left(\sigma\varepsilon_1^{1/3} + (1-\sigma)\sigma\varepsilon_2^{1/3}\right)^3 \qquad \text{Equation 1}$$

where $\varepsilon_{bulk}$ is the bulk relative permittivity of the material between the electrodes, $\varepsilon_1$ is the relative permittivity of water, $\varepsilon_2$ is the relative permittivity of the aerosol-forming substrate and a is the volume fraction of water in the material.

The relationship between capacitance and bulk relative permittivity of the material between the electrodes depends on the geometry of the capacitor. For example, in an embodiment in which the first electrode is formed by a heating element extending centrally through the aerosol-forming substrate and the second electrode is formed by a cylindrical foil wrapper circumscribing the aerosol-forming substrate, the capacitor may be approximated to be a cylindrical capacitor, with the capacitance of the capacitor being given by Equation 2 below:

$$C = \left(\frac{2\pi\varepsilon_0\varepsilon_{bulk}}{ln\left(\frac{r_{outer}}{r_{inner}}\right)}\right) \qquad \text{Equation 2}$$

where C is the measured capacitance, $\varepsilon_0$ is the permittivity of free space, $r_{outer}$ is the radius of the outer second electrode, and $r_{inner}$ is the radius of the central first electrode.

Provided that the radii of the first and second electrodes are known, and the relative permittivities of water and the aerosol-forming substrate are known, a measured capacitance between the first and second electrodes may be input into Equation 2 to determine the bulk relative permittivity, and the bulk relative permittivity may be input into Equation 1 to determine the volume fraction of water in the aerosol-forming substrate. The determined volume fraction of water or the absolute volume of water in the aerosol-forming substrate may be used to control the power supplied to the heater.

It will be appreciated that the above described embodiments are exemplary embodiments of the invention only. It will also be appreciated that features described above in relation to one embodiment of the invention may also be applied to other embodiments of the invention.

**Claims**

1. A controller (124, 224, 324, 424) for an aerosol-generating device of an aerosol-generating system, wherein the controller is configured to:

   control a supply of power from a power supply (126, 226) to at least one heater (120, 220) for heating an aerosol-generating article (140, 340, 440), the aerosol-generating article (140, 340, 440) comprising an aerosol-forming substrate (142, 342, 442), the aerosol-forming substrate (142, 342, 442) being a substantially solid dielectric material;

measure the capacitance across a first electrode (128, 228) and a second electrode (130, 268), the second electrode (130, 268) being spaced apart from the first electrode (128, 228) so that at least a portion of an aerosol-generating article (140) is receivable between the first electrode (128, 228) and the second electrode (130, 268); and

vary the supply of power to the at least one heater based on the measured capacitance.

2. A controller (124, 224, 324, 424) according to claim 1, wherein the varying of the supply of power to the at least one heater comprises:

supplying power from the power supply (126, 226) to the at least one heater (120, 220) in a first power profile when the measured capacitance is within a predetermined first range; and

supplying power from the power supply (126, 226) to the at least one heater (120, 220) in a second power profile, different to the first power profile, when the measured capacitance is within a predetermined second range.

3. A controller (124, 224, 324, 424) according to claim 1 or claim 2, wherein the controller (124, 224, 324, 424) is further configured to measure the capacitance before supplying power from the power supply (126, 226, 326, 426) to the at least one heater (120, 220, 320, 420) for heating the aerosol-forming substrate (142, 342, 442).

4. An aerosol-generating device (110, 210, 310, 440) comprising a controller according to any one of claims 1 to 3.

5. An aerosol-generating device (110, 210, 310, 440) according to claim 4, wherein the aerosol-generating device (110, 210, 310, 410) comprises the power supply (126, 226, 326, 426), and at least one heater (120, 220, 320, 420).

6. An aerosol-generating system according to claim 4 or claim 5, wherein at least one of the first electrode (128, 228) and the second electrode (130, 268) forms part of the at least one heater (120, 220).

7. An aerosol-generating device according to any one of claims 4 to 6, wherein the aerosol-generating device (110, 210, 310) comprises at least one of the first electrode (128, 228) and the second electrode (130, 268).

8. An aerosol-generating device (110, 210, 310, 440) according to any one of claims 4 to 7, wherein the aerosol-generating device (110, 210, 310, 410) comprises a cavity (114, 214, 314, 414) for receiving the aerosol-generating article (140, 340, 440) comprising the aerosol-forming substrate (142, 342, 442).

9. An aerosol-generating device (110) according to claim 7, wherein the aerosol-generating device (110) comprises a cavity (114) for receiving the aerosol-generating article (140) comprising the aerosol-forming substrate (142), wherein the at least one heater (120) comprises an elongate heater (120) arranged for insertion into the aerosol-generating article (140) when the aerosol-generating article (140) is received within the cavity (114), wherein the first electrode (128) forms part of the elongate heater (120), and wherein the second electrode (130) is on an inner surface of the cavity (114).

10. An aerosol-generating device (210) according to claim 7, wherein the aerosol-generating device (210) comprises a cavity (214) for receiving the aerosol-generating article (214) comprising the aerosol-forming substrate (142), and wherein the at least one heater (220) comprises an elongate heater (220) arranged for insertion into the aerosol-generating article (140) when the aerosol-generating article (140) is received within the cavity (214), wherein the first electrode (228) forms part of the elongate heater (220), wherein the aerosol-generating device (210) comprises a tubular extractor (260) for extracting the aerosol-generating article (140) from the cavity (214), the extractor (260) being arrangeable in the cavity (214) and movable in the cavity (214) relative to the elongate heater (220), and wherein the second electrode (268) forms part of the extractor (260).

11. An aerosol-generating system according to claims 9 or 10, wherein the second electrode has a substantially annular shape so that the second electrode circumscribes at least a portion of the aerosol-generating article when the aerosol-generating article is received within the cavity.

12. An aerosol-generating device (110, 210) according to any one of claims 4 to 6, wherein the aerosol-generating device (110, 210) comprises:

a cavity (114, 214) for receiving the aerosol-generating article (140) comprising the aerosol-forming substrate (142); and

the first electrode (128, 228) and the second electrode (130, 268) spaced apart from the first electrode (128, 228) so that at least a portion of the aerosol-generating article (140) is received between the first electrode (128, 228) and the second electrode (130, 268) when the aerosol-generating article (140) is received within the cavity (114, 214).

13. An aerosol-generating device (310) according to any one of claims 4 to 6, wherein the aerosol-generating device (310) comprises:

a cavity (314) for receiving the aerosol-generating article (340) comprising the aerosol-forming substrate (342); the first electrode (328); and

an electrical contact spaced (330) apart from the first electrode (328) so that the second electrode (352) of the aerosol-generating article (340) can contact the electrical contact (330) when the aerosol-generating article (340) is received within the cavity (314) and at least a portion of the aerosol-generating article (340) is received between the first electrode (328) and the second electrode (352).

14. An aerosol-generating device (410) according to any one of claims 4 to 6, wherein the aerosol-generating device (410) comprises:

a cavity (414) for receiving the aerosol-generating article (440) comprising the aerosol-forming substrate (442); and

a first electrical contact (428) and a second electrical contact (430) spaced apart from the first electrical contact (428), the first electrical contact (428) and the second electrical contact (430) being arranged so that a first electrode (452) of the aerosol-generating article (440) can contact the first electrical contact (428) and a second electrode (454) of the aerosol-generating article (440) can contact the second electrical contact (430) when the aerosol-generating article (440) is received within the cavity (414) with at least a portion of the aerosol-generating article (440) being received between the first electrode (452) and the second electrode (454).

15. An aerosol-generating system comprising an aerosol-generating device (110, 210, 310, 440) according to any one of claims 4 to 11, and an aerosol-generating article (140, 340, 440) comprising an aerosol-forming substrate (142, 342, 442), the aerosol-forming substrate (142, 342, 442) being a dielectric material, and the aerosol-forming substrate (142, 342, 442) being substantially solid.

130    116    114    133    110

126    124

118    128    122    120    112

**Figure 1**

140

146

142    144    150    148

**Figure 2**

Figure 3

Figure 4

**Figure 5**

**Figure 6**

Figure 7

Figure 8

330 352 316 314 310

340

326 324

318 328 342 336 312

**Figure 9**

428 433 410

416 414

426 424

430 418 422 420 412

**Figure 10**

**Figure 11**

**Figure 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017051006 A1
- WO 2017051011 A1
- WO 2017051016 A1